# EUROPEAN PATENT SPECIFICATION

(11) **EP 4 079 498 B1**
(45) Date of publication and mention of the grant of the patent: **25.10.2023**
(21) Application number: 22168137.2
(22) Date of filing: 13.04.2022
(51) Int. Cl.: B29D 30/06

(54) **METHOD OF MANUFACTURING SEALANT FOR A TIRE**
VERFAHREN ZUR HERSTELLUNG EINES DICHTUNGSMITTELS FÜR REIFEN
PROCÉDÉ DE FABRICATION D'UN PRODUIT D'ÉTANCHÉITÉ POUR UN PNEU

(30) Priority: 23.04.2021 JP 2021073259
(43) Date of publication of application: 26.10.2022
(73) Proprietor: The Yokohama Rubber Co., Ltd., Tokyo 105-8685 (JP)
(72) Inventor: SAIKI, Takeaki, Hiratsuka-shi, 254-8601 (JP); KARASAWA, Yuichiro, Hiratsuka-shi, 254-8601 (JP); OKAMATSU, Takahiro, Hiratsuka-shi, 254-8601 (JP)
(74) Representative: Dilg, Haeusler, Schindelmann Patentanwaltsgesellschaft mbH

(56) References cited:
- EP-A1- 1 435 301
- JP-A- 2019 163 399
- US-A1- 2013 203 913
- US-A1- 2020 001 560

## Description

### Technical Field

The present invention relates to a method of manufacturing a sealant for a tire constituting a sealant layer of a self-sealing pneumatic tire in which the sealant layer is provided on a tire inner surface.

### Background Art

A known pneumatic tire provides a sealant layer on an inner side in the tire radial direction of an innerliner layer in a tread portion (see, for example, Patent Document 1). In such a pneumatic tire, when a foreign matter, such as a nail, penetrates the tread portion to create a through-hole, a sealant constituting the sealant layer flows into the through-hole, and accordingly, a decrease in air pressure can be suppressed and travel can be maintained.

The sealant to be used for the self-sealing pneumatic tire described above requires a low viscosity for flowing into the through-hole as described above. The sealant also requires adhesiveness to be attached to the tire inner surface and to effectively close the through-hole. The sealant is thus formed of, for example, a sealant composition having butyl rubber as a main component (see, for example, Patent Document 2). However, butyl rubber is more expensive compared to other general-purpose rubbers, such as natural rubber, styrene-butadiene rubber, butadiene rubber, and isoprene rubber, and constituting the sealant by using these general-purpose rubbers has also been examined.

Unfortunately, to ensure the physical properties (low viscosity and adhesiveness) required for the sealant in which the general-purpose rubbers described above are used, blending a large amount of softener (for example, oil) in a sealant composition is necessary, leading to a concern of degraded productivity (for example, significantly lengthened time taken for a step of injecting softener). As such, countermeasures to ensure good performance of closing a through-hole (sealing properties) by reducing the viscosity to a level sufficient for a sealant in which general-purpose rubbers are used while suppressing an amount of softener are awaited.

### Citation List

### Patent Literature

Patent Document 1: JP 2006-152110 A
Patent Document 2: JP 2019-163399 A

### Summary of Invention

### Technical Problem

Patent document 2 discloses the features of the preamble of independent claim 1.

An object of the present invention is to provide a method of manufacturing a sealant for a tire that can ensure good sealing properties even when a general-purpose rubber is used.

### Solution to Problem

A method of manufacturing a sealant for a tire according to an embodiment of the present invention for achieving the above-described object is a method of manufacturing a sealant for a tire by vulcanizing a sealant composition containing diene rubber as a main component of a rubber component. The method includes a vulcanization step of vulcanizing the sealant composition that is unvulcanized and a cutting step of cutting a rubber molecule in the rubber component by kneading at least the rubber component of components of the sealant composition that is unvulcanized at a temperature of 120°C or higher. The cutting is performed before the vulcanization step and/or simultaneously with the vulcanization step.

### Advantageous Effects of Invention

As a result of diligent research on a manufacturing method to reduce the viscosity of the sealant for a tire by a method other than increasing an amount of softener (for example, oil), the inventors of the present invention have found that a rubber molecule can be cut by kneading a rubber component during or before vulcanization, and thereby, the viscosity of the sealant for a tire can be reduced without increasing the amount of softener. The inventors have also found that such a sealant for a tire obtained by cutting the rubber molecule exhibits better sealing properties (improves the sealing properties in a low temperature environment, in particular) than sealing properties obtained with the amount of softener increased. Based on these findings, an embodiment of the present invention provides a cutting step of cutting a rubber molecule in a rubber component by kneading at least the rubber component of components of a sealant composition that is unvulcanized and performs the cutting step at a temperature of 120°C or higher before a vulcanization step or simultaneously with the vulcanization step, enabling the viscosity of the sealant for a tire to be effectively reduced. This enables a tire using the sealant for a tire manufactured by the manufacturing method according to an embodiment of the present invention to exhibit good sealing properties in room temperature and low temperature environments.

In the manufacturing method according to an embodiment of the present invention, a complex viscosity of the sealant for a tire is preferably 70% or less of a complex viscosity of a sealant made of identical components and manufactured without performing the cutting. This enables the viscosity of the sealant for a tire to be effectively reduced and good sealing properties to be exhibited in room temperature and low temperature environments.

In the manufacturing method according to an embodiment of the present invention, when the cutting step is performed at a temperature of 120°C or higher before the vulcanization step, a part of the components of the sealant composition that is unvulcanized is kneaded in the cutting step, and it is preferable that the proportion of the rubber component accounting for the part of the components of the sealant composition that is unvulcanized to be kneaded in the cutting step is 50 mass% or more. This enables the viscosity of the sealant for a tire to be effectively reduced and good sealing properties to be exhibited in room temperature and low temperature environments.

In the manufacturing method according to an embodiment of the present invention, the rubber component is preferably at least one selected from the group consisting of natural rubber, styrene-butadiene rubber, butadiene rubber, and isoprene rubber. Additionally, in the manufacturing method according to an embodiment of the present invention, 20 parts by mass to 140 parts by mass of softener is preferably blended per 100 parts by mass of the rubber component in the sealant composition.

The sealant for a tire manufactured by the manufacturing method described above can be used for a pneumatic tire including a sealant layer on an inner surface of a tread portion (so-called self-sealing tire). In this case, a pneumatic tire is preferably manufactured by preparing the sealant for a tire by the manufacturing method described above and forming the sealant layer on the inner surface of the tread portion by using the sealant for a tire prepared.

### Brief Description of Drawings

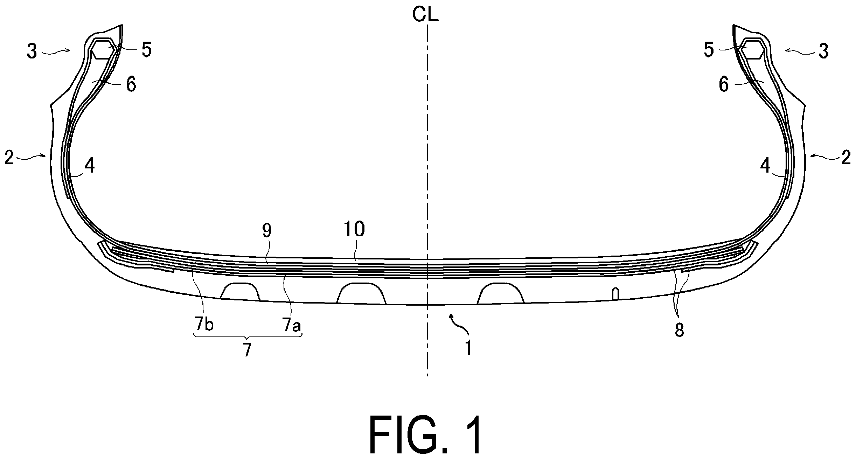

FIG. 1 is a meridian cross-sectional view illustrating an example of a pneumatic tire according to an embodiment of the present invention.

### Description of Embodiments

Configurations according to embodiments of the present invention will be described in detail below with reference to the accompanying drawings.

As illustrated in FIG. 1, for example, a pneumatic tire (self-sealing pneumatic tire) using a sealant for a tire manufactured by the manufacturing method according to an embodiment of the present invention includes a tread portion 1 extending in a tire circumferential direction and having an annular shape, a pair of sidewall portions 2 disposed on both sides of the tread portion 1, and a pair of bead portions 3 disposed on an inner side of the sidewall portions 2 in a tire radial direction. A reference sign CL in FIG. 1 denotes a tire equator. Note that the tread portion 1, the sidewall portions 2, and the bead portions 3, which are not illustrated in FIG. 1 that is a meridian cross-sectional view, each extend in the tire circumferential direction and have an annular shape, forming a basic structure of a toroidal shape of the pneumatic tire. Other tire components in the meridian cross-sectional view also extend in the tire circumferential direction and have annular shapes unless otherwise indicated.

In the example of FIG. 1, a carcass layer 4 is mounted between the pair of bead portions 3 that are left and right. The carcass layer 4 includes a plurality of reinforcing cords extending in the tire radial direction and is folded back around a bead core 5 and a bead filler 6 disposed in each of the bead portions 3 from a vehicle inner side to a vehicle outer side. The bead filler 6 is disposed on an outer circumferential side of the bead core 5 and is enveloped by a body portion and a folded back portion of the carcass layer 4.

At least one belt layer 7 is embedded on the outer circumferential side of the carcass layer 4 in the tread portion 1. The belt layer 7 necessarily includes an inner belt layer 7a disposed adjacent to the outer circumferential side of the carcass layer, and an outer belt layer 7b disposed adjacent to the outer circumferential side of the inner belt layer 7a can be optionally provided as in the illustrated example. Each belt layer 7 (inner belt layer 7a or outer belt layer 7b) includes a plurality of reinforcing cords that are inclined with respect to the tire circumferential direction, and the reinforcing cords are disposed between layers intersecting with each other. In each belt layer 7, the inclination angle of the reinforcing cords with respect to the tire circumferential direction is set in a range of, for example, 10° or more and 40° or less. A belt reinforcing layer 8 is provided on an outer circumferential side of the belt layers 7 in the tread portion 1. In the illustrated example, the belt reinforcing layer 8 is provided including two layers of a full cover layer covering the entire width of the belt layer 7 and an edge cover layer disposed further on an outer circumferential side than the full cover layer and covering only an end portion of the belt layer 7. The belt reinforcing layer 8 includes an organic fiber cord oriented in the tire circumferential direction, and an angle of the organic fiber cord with respect to the tire circumferential direction is set to be, for example, from 0° to 5°.

In a tire inner surface, an innerliner layer 9 is provided along the carcass layer 4. The innerliner layer 9 is a layer for preventing air in the tire from permeating outside the tire. The innerliner layer 9 includes, for example, a rubber composition including, as a main component, butyl rubber having air permeation preventive performance. Alternatively, the innerliner layer 9 can also include a resin layer including a thermoplastic resin as a matrix. In the case of the resin layer, an elastomer component may be dispersed in a matrix of a thermoplastic resin.

As illustrated in FIG. 1, a sealant layer 10 is provided on an inner side in the tire radial direction of the innerliner layer 9 in the tread portion 1. Particularly, the sealant layer 10 is provided in the tire inner surface corresponding to a region into which a foreign matter, such as a nail, may penetrate during traveling, that is, a ground contact region of the tread portion 1. Particularly, the sealant layer 10 may be provided in the range wider than the width of the minimum belt layer 7a. A sealant composition according to an embodiment of the present invention is used for the sealant layer 10. The sealant layer 10 is attached to the inner surface of a pneumatic tire having the basic structure described above. When a foreign matter, such as a nail, penetrates the tread portion 1, the sealant for a tire having adhesiveness and constituting the sealant layer 10 flows into the through-hole and seals the through-hole, suppressing a reduction in air pressure and making it possible to maintain travel.

The sealant layer 10 has a thickness of, for example, from 2.0 mm to 5.0 mm. Having this degree of thickness enables a flow of a sealant during traveling to be suppressed while ensuring good sealing properties. Additionally, good processability at the time of attaching the sealant layer 10 to the tire inner surface is also obtained. When the thickness of the sealant layer 10 is less than 2.0 mm, it becomes difficult to ensure sufficient sealing properties. When the thickness of the sealant layer 10 exceeds 5.0 mm, tire weight increases and rolling resistance degrades. Note that "the thickness of the sealant layer 10" here refers to the average thickness.

The sealant layer 10 can be formed by attaching later the sealant layer 10 to the inner surface of the vulcanized pneumatic tire. The sealant layer 10 can be formed by, for example, attaching a sealant for a tire that is manufactured by the manufacturing method described below and vulcanized and molded in a sheet shape to the entire circumference of the tire inner surface or attaching the sealant for a tire vulcanized and molded in a string shape or a band shape to the tire inner surface in a spiral-like manner. Alternatively, the sealant layer 10 can be formed by applying (attaching) a vulcanized sealant that is heated to a temperature from 150°C to 180°C, softened into a paste, and extruded into a string shape from an applicator to the tire inner surface in a spiral-like manner. As described above, the sealant for a tire vulcanized (crosslinked) is used. That is, the sealant for a tire that has been vulcanized (crosslinked) in advance is less likely to deform, and thus deformation and flow associated with travel are less likely to occur even after the sealant for a tire is placed on the tire inner surface as the sealant layer 10.

An embodiment of the present invention mainly relates to a method of manufacturing a sealant for a tire, the sealant constituting the sealant layer 10 of the self-sealing pneumatic tire described above; as such, the basic structure of the pneumatic tire and the structure of the sealant layer 10 are not limited to the examples described above.

In the method of manufacturing a sealant for a tire, in general, various materials are sequentially fed into a kneader and kneaded, followed by vulcanization (vulcanization step) performed at a predetermined temperature. Depending on the stage of being fed into a kneader, the various materials are broadly categorized as rubber component, powder-based compounding agent (such as carbon black, zinc oxide, and stearic acid), softener (such as oil, DOP [plasticizers such as dioctyl phthalate], liquid rubbers, liquid polymers, and thermoplastic resins), and vulcanization compounding agent (such as sulfur, vulcanization accelerators, and vulcanization aids). These materials are usually fed into a kneader in the order of rubber component, powder-based compounding agent, softener, and vulcanization compounding agent. Note that the softener is not fed the full amount all at once but is fed in small, divided portions.

In an embodiment of the present invention, a main component of the rubber component is diene rubber. The diene rubber is preferably at least one selected from the group consisting of natural rubber, styrene-butadiene rubber, butadiene rubber, and isoprene rubber. Butyl rubber may be used as a rubber component constituting a sealant for a tire; however, an embodiment of the present invention uses diene rubber (general-purpose rubber) described above rather than butyl rubber to reduce costs. These rubbers can be used alone or in combination. Among these rubbers, natural rubber and isoprene rubber can be suitably used from the perspective of the molecular cutting described below. Meanwhile, styrene-butadiene rubber or butadiene rubber is preferably used in conjunction with natural rubber or isoprene rubber because it tends to be difficult to perform the molecular cutting described below with styrene-butadiene rubber or butadiene rubber. Of course, styrene-butadiene rubber or butadiene rubber can be used alone.

When a general-purpose rubber described above is used in a known manufacturing method, it is necessary to blend a large amount of softener (for example, oil) in a sealant composition in order to ensure the physical properties (low viscosity and adhesiveness) required of a sealant; however, in a case of using the general-purpose rubber described above while employing the manufacturing method according to an embodiment of the present invention described below, the amount of softener can be reduced. Specifically, in the sealant composition according to an embodiment of the present invention, 20 parts by mass to 140 parts by mass, preferably from 60 parts by mass to 100 parts by mass, of softener (oil) is blended per 100 parts by mass of the rubber component. When the manufacturing method according to an embodiment of the present invention described below is employed, the physical properties (low viscosity and adhesiveness) required of a sealant can be ensured even when the blended amount of softener is within the range described above.

The manufacturing method according to an embodiment of the present invention includes a cutting step in which at least the rubber component of the components of the sealant composition that is unvulcanized is kneaded at a temperature of 120°C or higher. In other words, in the method of manufacturing a sealant for a tire, the various materials are sequentially fed, as described above; thus, the cutting step is performed by, in a state in which at least the rubber component is fed into a kneader, setting the temperature to 120°C or higher and kneading the component fed into a kneader, or, the cutting step is performed by, in a state in which at least the rubber component is fed into a kneader and in a state in which the temperature has been raised to 120°C or higher by the stirring heat, kneading the component fed into a kneader. In this cutting step, at least the rubber component of the components of the sealant composition that is unvulcanized is kneaded at a temperature of 120°C or higher, cutting the rubber molecules in the rubber component; as such, the viscosity of the sealant for a tire can be reduced. By introducing such a cutting step, it is possible to achieve a low viscosity of the sealant for a tire by cutting the rubber molecules while the amount of softener is not increased. In addition, a sealant for a tire obtained with the rubber molecules cut in this manner can exhibit better sealing properties (in particular, enhanced sealing properties in a low temperature environment) than a configuration in which the amount of softener is increased.

The cutting step can be performed before the vulcanization step or can be performed simultaneously with the vulcanization step. Furthermore, the cutting step can be performed both before the vulcanization step and, on top of that, also simultaneously with the vulcanization step. When the cutting step is performed before vulcanization, the cutting step is preferable performed by, in a state in which at least the rubber component is fed into a kneader, heating the fed material to 120°C or higher, preferably from 130°C to 180°C, and kneading. Meanwhile, when the cutting step is performed simultaneously with vulcanization, the fed material is heated to a vulcanization temperature (120°C or higher, preferably from 140°C to 180°C) and kneaded; as such, it is not necessary to separately perform heating for the cutting step.

When the cutting step is performed before the vulcanization step, the cutting step may be performed before all of the various materials (rubber component, powder-based compounding agent, softener) are fed, that is, the cutting step may be performed in a state in which only a part of the components of the sealant composition that is unvulcanized is fed. In this case, a proportion of the rubber component accounting for the part of the components of the sealant composition that is unvulcanized to be kneaded in the cutting step may be 50 mass% or more, preferably from 50 mass% to 90 mass%. In other words, in the part of the components of the sealant composition that is unvulcanized to be kneaded in the cutting step, it is preferable that the amount of the material fed other than the rubber component is the same as or less than the amount of the rubber component. By performing the cutting step in this state, the rubber molecules in the rubber component can be reliably cut, which is advantageous for reducing the viscosity of the sealant for a tire. As described above, given that the materials are fed into a kneader in the order of rubber component, powder-based compounding agent, softener, and vulcanization compounding agent, and that the amount of softener is about the same as that of the rubber component, the cutting step is preferably performed at a stage in which the rubber component and the powder-based compounding agent are fed.

In any case, in the cutting step, the degree of cutting of the rubber molecules in the rubber component (that is, the viscosity of the sealant for a tire being manufactured) can be adjusted by adjusting the temperature, the kneading time, the rotation speed of kneader, and the shear force of kneader. For example, when the cutting step is performed before vulcanization, the temperature is preferably set to from 130°C to 180°C, the kneading time is preferably set to from 20 minutes to 120 minutes, and the rotation speed of kneader is preferably set to from 20 rpm to 80 rpm. Meanwhile, in simultaneously performing the cutting step and the vulcanization, the temperature (vulcanization temperature) is preferably set to from 140°C to 180°C, the kneading time (vulcanization time) is preferably set to from 30 minutes to 120 minutes, and the rotation speed of kneader is preferably set to from 20 rpm to 60 rpm.

The complex viscosity of a sealant for a tire manufactured by the manufacturing method according to an embodiment of the present invention is preferably 70% or less and more preferably from 40% to 60% of the complex viscosity of a sealant made of the same components and manufactured without being subjected to a cutting step. In this way, it is possible to sufficiently reduce the viscosity of the sealant for a tire. Note that in an embodiment of the present invention, "complex viscosity" is a value measured using a dynamic viscoelasticity measurement device with a 25 mmϕ parallel plate and at a sample thickness of 1.5 mm, a frequency of 1 Hz, a strain of 0.1%, and a temperature of 30°C.

An embodiment of the present invention will further be described below by way of Examples, but the scope of an embodiment of the present invention is not limited to Examples.

### Examples

Sealant compositions of the compositions described in Tables 1 to 2 were prepared. Specifically, the materials described in Tables 1 to 2 were fed into and kneaded by a 0.6L kneader (available from Toyo Seiki) in the order of rubber component (natural rubber, styrene-butadiene rubber), powder-based compounding agent (carbon black, zinc oxide, stearic acid), softener (oil), and vulcanization compounding agent (sulfur, vulcanization accelerator); then, the sealant compositions were prepared by a vulcanization step. At this time, amounts that are in the compounded ratios in Tables 1 to 2 and that are equivalent of from 60 to 70% of the capacity of the kneader were obtained based on calculated specific gravity, and feeding and kneading were carried out. At this time, the sealants of Comparative Examples 1 and 2 and Examples 1 to 11 were obtained by changing the presence of a cutting step to be performed before vulcanization and the conditions of the cutting step (kneading temperature, kneading time, rotation speed of kneader) and the presence of a cutting step to be performed simultaneously with vulcanization and the conditions of the cutting step (kneading temperature [vulcanization temperature], kneading time [vulcanization time], rotation speed of kneader) in accordance with the descriptions in Tables 1 to 2. In the examples in which a cutting step was performed before vulcanization, the cutting step was performed at the stage where natural rubber, carbon black, zinc oxide, and stearic acid of the materials described above were fed. For the examples in which no cutting step was performed simultaneously with vulcanization, typical press vulcanization was performed under the conditions (vulcanization temperature and vulcanization time) described in Tables 1 to 2.

In Tables 1 to 2, the complex viscosity of each of the sealants is also described. The complex viscosity was measured using a dynamic viscoelasticity measurement device with a 25 mmϕ parallel plate at a sample thickness of 1.5 mm, a frequency of 1 Hz, a strain of 0.1%, and a temperature of 30°C.

Each of the sealants was attached to the inner side in the tire radial direction of the innerliner layer at the tread portion of a pneumatic tire (tire size: 255/40R20) having the basic structure illustrated in FIG. 1, resulting in a test tire; the sealing properties at room temperature ("sealing properties [20°C]" in the tables) and the sealing properties in a low temperature environment ("sealing properties [-15°C]" in the tables) were evaluated using the test method below, and the results are listed in Tables 1 to 2.

### Sealing properties (20°C)

Each of the test tires was mounted on a wheel having a rim size of 20×8.5J, and the wheel was mounted on a test vehicle. In a room temperature environment at an initial air pressure of 250 kPa and a load of 8.5 kN, a nail having a diameter of 4.0 mm was inserted into the tread portion; then, after the tire was left to stand for two hours in a state in which the nail was removed, the air pressure was measured. The evaluation results are indicated by the following five levels. Note that when scores of the evaluation results are "3" or more, this means that sufficient sealing properties are exhibited, and that as the scores are larger, more excellent sealing properties are exhibited.
5: Air pressure obtained after the standing is 240 kPa or more and 250 kPa or less
4: Air pressure obtained after the standing is 230 kPa or more and less than 240 kPa
3: Air pressure obtained after the standing is 215 kPa or more and less than 230 kPa
2: Air pressure obtained after the standing is 200 kPa or more and less than 215 kPa
1: Air pressure obtained after the standing is less than 200 kPa

### Sealing properties (-15°C)

After being cooled at a temperature of -15°C for 24 hours, each of the test tires was mounted on a wheel having a rim size of 20×8.5 J, and the wheel was mounted on a test vehicle. At an initial air pressure of 250 kPa, a load of 8.5 kN, and a temperature of -15°C, a nail having a diameter of 4.0 mm was inserted into the tread portion; then, after the test tire was left to stand for two hours at -15°C in a state in which the nail was removed, the air pressure was measured. The evaluation results are indicated by the following five levels. Note that when scores of the evaluation results are "3" or more, this means that sufficient sealing properties are exhibited, and that as the scores are larger, more excellent sealing properties are exhibited.
5: Air pressure obtained after the standing is 240 kPa or more and 250 kPa or less
4: Air pressure obtained after the standing is 230 kPa or more and less than 240 kPa
3: Air pressure obtained after the standing is 215 kPa or more and less than 230 kPa
2: Air pressure obtained after the standing is 200 kPa or more and less than 215 kPa
1: Air pressure obtained after the standing is less than 200 kPa

### [Table 1-1]

**Table 1**

| | | | Comparative Example 1 | Example 1 | Comparative Example 2 |
|---|---|---|---|---|---|
| Blend | NR | Parts by mass | 50 | 50 | 100 |
| | SBR | Parts by mass | 50 | 50 | |
| | Oil | Parts by mass | 160 | 160 | 100 |
| | CB | Parts by mass | 10 | 10 | 10 |
| | Zinc oxide | Parts by mass | 0.5 | 0.5 | 0.5 |
| | Stearic acid | Parts by mass | 0.5 | 0.5 | 0.5 |
| | Sulfur | Parts by mass | 1.25 | 1.25 | 1.25 |
| | Vulcanization accelerator | Parts by mass | 1.0 | 1.0 | 1.0 |
| Cutting step (before vulcanization) | Presence | | NO | NO | NO |
| | Kneading temperature | °C | - | - | - |
| | Kneading time | min. | - | - | - |
| | Rotation speed of kneader | rpm | - | - | - |
| Cutting step (simultaneously with vulcanization) | Presence | | NO | YES | NO |
| | Kneading temperature (vulcanization temperature) | °C | - | 180 | - |
| | Kneading time (vulcanization time) | min. | - | 25 | - |
| | Rotation speed of kneader | rpm | - | 60 | - |
| Physical properties | Complex viscosity | (Pa•s) | 5900 | 3000 | 7000 |
| Evaluation results | Sealing properties (20°C) | | 5 | 5 | 1 |
| | Sealing properties (-15°C) | | 2 | 5 | 1 |

### [Table 1-2]

**Table 1**

| | | | Example 2 | Example 3 | Example 4 | Example 5 |
|---|---|---|---|---|---|---|
| Blend | NR | Parts by mass | 100 | 100 | 100 | 100 |
| | SBR | Parts by mass | | | | |
| | Oil | Parts by mass | 100 | 100 | 100 | 100 |
| | CB | Parts by mass | 10 | 10 | 10 | 10 |
| | Zinc oxide | Parts by mass | 0.5 | 0.5 | 0.5 | 0.5 |
| | Stearic acid | Parts by mass | 0.5 | 0.5 | 0.5 | 0.5 |
| | Sulfur | Parts by mass | 1.25 | 1.25 | 1.25 | 1.25 |
| | Vulcanization accelerator | Parts by mass | 1.0 | 1.0 | 1.0 | 1.0 |
| Cutting step (before vulcanization) | Presence | | NO | NO | NO | YES |
| | Kneading temperature | °C | - | - | - | 130 |
| | Kneading time | min. | - | - | - | 30 |
| | Rotation speed of kneader | rpm | - | - | - | 60 |
| Cutting step (simultaneously with vulcanization) | Presence | | YES | YES | YES | NO |
| | Kneading temperature (vulcanization temperature) | °C | 180 | 180 | 180 | - |
| | Kneading time (vulcanization time) | min. | 25 | 25 | 25 | - |
| | Rotation speed of kneader | rpm | 20 | 40 | 60 | - |
| Physical properties | Complex viscosity | (Pa•s) | 4300 | 4000 | 3,300 | 4000 |
| Evaluation results | Sealing properties (20°C) | | 5 | 5 | 5 | 4 |
| | Sealing properties (-15°C) | | 5 | 5 | 5 | 4 |

### [Table 2-1]

**Table 2**

| | | | Example 6 | Example 7 | Example 8 |
|---|---|---|---|---|---|
| Blend | NR | Parts by mass | 100 | 100 | 100 |
| | SBR | Parts by mass | | | |
| | Oil | Parts by mass | 100 | 100 | 100 |
| | CB | Parts by mass | 10 | 10 | 10 |
| | Zinc oxide | Parts by mass | 0.5 | 0.5 | 0.5 |
| | Stearic acid | Parts by mass | 0.5 | 0.5 | 0.5 |
| | Sulfur | Parts by mass | 1.25 | 1.25 | 1.25 |
| | Vulcanization accelerator | Parts by mass | 1.0 | 1.0 | 1.0 |
| Cutting step (before vulcanization) | Presence | | NO | NO | YES |
| | Kneading temperature | °C | - | - | 120 |
| | Kneading time | min. | - | - | 30 |
| | Rotation speed of kneader | rpm | - | - | 60 |
| Cutting step (simultaneously with vulcanization) | Presence | | YES | YES | NO |
| | Kneading temperature (vulcanization temperature) | °C | 150 | 180 | - |
| | Kneading time (vulcanization time) | min. | 50 | 15 | - |
| | Rotation speed of kneader | rpm | 60 | 60 | - |
| Physical properties | Complex viscosity | (Pa•s) | 2,700 | 4000 | 4600 |
| Evaluation results | Sealing properties (20°C) | | 5 | 5 | 4 |
| | Sealing properties (-15°C) | | 5 | 5 | 3 |

### [Table 2-2]

**Table 2**

| | | | Example 9 | Example 10 | Example 11 |
|---|---|---|---|---|---|
| Blend | NR | Parts by mass | 100 | 100 | 100 |
| | SBR | Parts by mass | | | |
| | Oil | Parts by mass | 100 | 100 | 100 |
| | CB | Parts by mass | 10 | 10 | 10 |
| | Zinc oxide | Parts by mass | 0.5 | 0.5 | 0.5 |
| | Stearic acid | Parts by mass | 0.5 | 0.5 | 0.5 |
| | Sulfur | Parts by mass | 1.25 | 1.25 | 1.25 |
| | Vulcanization accelerator | Parts by mass | 1.0 | 1.0 | 1.0 |
| Cutting step (before vulcanization) | Presence | | YES | YES | YES |
| | Kneading temperature | °C | 130 | 130 | 130 |
| | Kneading time | min. | 20 | 30 | 30 |
| | Rotation speed of kneader | rpm | 60 | 40 | 60 |
| Cutting step (simultaneously with vulcanization) | Presence | | NO | NO | YES |
| | Kneading temperature (vulcanization temperature) | °C | - | - | 150 |
| | Kneading time (vulcanization time) | min. | - | - | 35 |
| | Rotation speed of kneader | rpm | - | - | 60 |
| Physical properties | Complex viscosity | (Pa•s) | 4300 | 4500 | 3000 |
| Evaluation results | Sealing properties (20°C) | | 4 | 4 | 5 |
| | Sealing properties (-15°C) | | 4 | 4 | 5 |

Types of raw materials used in Tables 1 and 2 are described below.
- NR: natural rubber, SIR20
- SBR: styrene-butadiene rubber, Nipol SBR1502, available from ZEON CORPORATION
- Oil: Diana Process NM280, available from Idemitsu Kosan, Co., Ltd.
- CB: carbon black, SEAST V, available from Tokai Carbon Co., Ltd.
- Zinc oxide: Zinc Oxide III, available from Seido Chemical Industry Co., Ltd.
- Stearic acid: beads stearic acid, available from NOF Corporation
- Sulfur: Golden Flower oil treated sulfur powder, available from Tsurumi Chemical Industry Co., Ltd.
- Vulcanization accelerator: NOCCELER DM-PO, available from Ouchi Shinko Chemical Industrial Co., Ltd.

As can be seen from Tables 1 to 2, Example 1 improved sealing properties in a low temperature environment while maintaining good sealing properties at room temperature compared to Comparative Example 1, in which the compounding proportion was identical to that of Example 1 but a cutting step was not performed. In addition, compared to Comparative Example 1, Comparative Example 2 contained only natural rubber as the rubber component; also, Comparative Example 2 contained a reduced amount of oil compared to that in Comparative Example 1, and a cutting step was not performed in Comparative Example 2. The sealing properties of Comparative Example 2 were significantly worse than that of Comparative Example 1. Meanwhile, compared to Comparative Examples 1 and 2, Examples 2 to 11, which had a compounding proportion identical to that of Comparative Example 2 and in which a cutting step was performed, excellent sealing properties were exhibited in both room temperature and low temperature environments.

### Reference Signs List

1 Tread portion
2 Sidewall portion
3 Bead portion
4 Carcass layer
5 Bead core
6 Bead filler
7 Belt layer
7a Inner belt layer
7b Outer belt layer
8 Belt reinforcing layer
9 Innerliner layer
10 Sealant layer
CL Tire equator

## Claims

1. A method of manufacturing a sealant for a tire by vulcanizing a sealant composition containing diene rubber as a main component of a rubber component, the method comprising:
a vulcanization step of vulcanizing the sealant composition that is unvulcanized; and **characterised by**
a cutting step of cutting a rubber molecule in the rubber component by kneading at least the rubber component of components of the sealant composition that is unvulcanized at a temperature of 120°C or higher, the cutting step being performed before the vulcanization step and/or simultaneously with the vulcanization step.

2. The method of manufacturing a sealant for a tire according to claim 1, wherein a complex viscosity of the sealant for a tire is 70% or less of a complex viscosity of a sealant made of an identical component and manufactured without performing the cutting step.

3. The method of manufacturing a sealant for a tire according to claim 1 or 2, wherein when the cutting step is performed at a temperature of 120°C or higher before the vulcanization step, a part of the components of the sealant composition that is unvulcanized is kneaded in the cutting step, and a proportion of the rubber component accounting for the part of the components of the sealant composition that is unvulcanized to be kneaded in the cutting step is 50 mass% or more.

4. The method of manufacturing a sealant for a tire according to any one of claims 1 to 3, wherein the rubber component is at least one selected from the group consisting of natural rubber, styrene-butadiene rubber, butadiene rubber, and isoprene rubber.

5. The method of manufacturing a sealant for a tire according to claim 4, wherein 20 parts by mass to 140 parts by mass of oil is blended per 100 parts by mass of the rubber component in the sealant composition.

6. A method of manufacturing a pneumatic tire, the method comprising:
preparing the sealant for a tire by the manufacturing method according to any one of claims 1 to 5; and
forming a sealant layer on an inner surface of a tread portion by using the sealant for a tire.

## Patentansprüche

1. Verfahren zum Herstellen eines Dichtmittels für einen Reifen durch Vulkanisieren einer Dichtmittelzusammensetzung, die Dienkautschuk als eine Hauptkomponente einer Kautschukkomponente enthält, wobei das Verfahren umfasst:
einen Vulkanisierungsschritt zum Vulkanisieren der Dichtmittelzusammensetzung, die nicht vulkanisiert ist; und **gekennzeichnet durch**
einen Schneideschritt zum Schneiden eines Kautschukmoleküls in der Kautschukkomponente durch Kneten mindestens der Kautschukkomponente von Komponenten der Dichtmittelzusammensetzung, die bei einer Temperatur von 120 °C oder höher nicht vulkanisiert ist, wobei der Schneideschritt vor dem Vulkanisierungsschritt und/oder gleichzeitig mit dem Vulkanisierungsschritt durchgeführt wird.

2. Verfahren zum Herstellen eines Dichtmittels für einen Reifen nach Anspruch 1, wobei eine komplexe Viskosität des Dichtmittels für einen Reifen 70 % oder weniger einer komplexen Viskosität eines Dichtmittels beträgt, das aus einer identischen Komponente gefertigt ist und ohne Durchführen des Schneideschritts hergestellt wird.

3. Verfahren zum Herstellen eines Dichtmittels für einen Reifen nach Anspruch 1 oder 2, wobei, wenn der Schneideschritt bei einer Temperatur von 120 °C oder höher vor dem Vulkanisierungsschritt durchgeführt wird, ein Teil der Komponenten der Dichtmittelzusammensetzung, der nicht vulkanisiert ist, in dem Schneideschritt geknetet wird, und einen Anteil der Kautschukkomponente, der den nicht vulkanisierten Teil der Komponenten der Dichtmittelzusammensetzung ausmacht, der in dem Schneideschritt geknetet werden soll, 50 Massenprozent oder mehr beträgt.

4. Verfahren zum Herstellen eines Dichtmittels für einen Reifen nach einem der Ansprüche 1 bis 3, wobei die Kautschukkomponente mindestens eines ist, das aus der Gruppe ausgewählt ist, die aus Naturkautschuk, Styrol-Butadien-Kautschuk, Butadien-Kautschuk und Isopren-Kautschuk besteht.

5. Verfahren zum Herstellen eines Dichtmittels für einen Reifen nach Anspruch 4, wobei 20 Massenteile bis 140 Massenteile Öl pro 100 Massenteile der Kautschukkomponente in der Dichtmittelzusammensetzung gemischt werden.

6. Verfahren zum Herstellen eines Luftreifens, wobei das Verfahren umfasst:
Herstellen des Dichtmittels für einen Reifen durch das Herstellungsverfahren nach einem der Ansprüche 1 bis 5; und
Formen einer Dichtmittelschicht auf einer Innenoberfläche eines Laufflächenabschnitts durch Verwenden des Dichtmittels für einen Reifen.

## Revendications

1. Procédé de fabrication d'un matériau d'étanchéité destiné à un pneu par vulcanisation d'une composition d'étanchéité contenant du caoutchouc diénique en guise de composant principal d'un composant caoutchouc, le procédé comprenant :
une étape de vulcanisation consistant à vulcaniser la composition d'étanchéité qui est non vulcanisée ; et **caractérisé par**
une étape de coupage consistant à couper une molécule de caoutchouc dans le composant caoutchouc en malaxant au moins le composant caoutchouc des composants de la composition d'étanchéité qui est non vulcanisée à une température de 120 °C ou plus, l'étape de coupage étant mise en oeuvre avant l'étape de vulcanisation et/ou simultanément à l'étape de vulcanisation.

2. Procédé de fabrication d'un matériau d'étanchéité destiné à un pneu selon la revendication 1, dans lequel une viscosité complexe du matériau d'étanchéité destiné à un pneu vaut 70 % ou moins d'une viscosité complexe d'un matériau d'étanchéité constitué d'un composant identique et fabriqué sans mettre en oeuvre l'étape de coupage.

3. Procédé de fabrication d'un matériau d'étanchéité destiné à un pneu selon la revendication 1 ou 2, dans lequel lorsque l'étape de coupage est mise en oeuvre à une température de 120 °C ou plus avant l'étape de vulcanisation, une partie des composants de la composition d'étanchéité qui est non vulcanisée est malaxée dans l'étape de coupage, et une proportion du composant caoutchouc représentant la partie des composants de la composition d'étanchéité qui est non vulcanisée destinée à être malaxée dans l'étape de coupage vaut 50 % en masse ou plus.

4. Procédé de fabrication d'un matériau d'étanchéité destiné à un pneu selon l'une quelconque des revendications 1 à 3, dans lequel le composant caoutchouc est au moins l'un choisi parmi le groupe constitué par caoutchouc naturel, caoutchouc styrène-butadiène, caoutchouc butadiène et caoutchouc isoprène.

5. Procédé de fabrication d'un matériau d'étanchéité destiné à un pneu selon la revendication 4, dans lequel 20 parties en masse à 140 parties en masse d'huile sont mélangées pour 100 parties en masse du composant caoutchouc dans la composition d'étanchéité.

6. Procédé de fabrication d'un pneumatique, le procédé comprenant :
la préparation du matériau d'étanchéité destiné à un pneu par le procédé de fabrication selon l'une quelconque des revendications 1 à 5 ; et
la formation d'une couche d'étanchéité sur une surface interne d'une partie bande de roulement en utilisant le matériau d'étanchéité destiné à un pneu.
